# EUROPÄISCHE PATENTSCHRIFT

(11) **EP 3 923 167 B1**
(45) Veröffentlichungstag und Bekanntmachung des Hinweises auf die Patenterteilung: **11.02.2026**
(21) Anmeldenummer: 20179185.2
(22) Anmeldetag: 10.06.2020
(51) Int. Cl.: G06F 21/57

(54) **VERFAHREN ZUM ERSTELLEN EINER AUTOMATISIERTEN SICHERHEITS-ANALYSE EINER ANLAGE, VORRICHTUNG UND COMPUTERPROGRAMMPRODUKT**
METHOD FOR CREATING AN AUTOMATED SECURITY ANALYSIS OF AN INSTALLATION, DEVICE AND COMPUTER PROGRAM PRODUCT
PROCÉDÉ DE GÉNÉRATION D'UNE ANALYSE DE SÉCURITÉ AUTOMATISÉE D'UNE INSTALLATION, DISPOSITIF ET PRODUIT PROGRAMME INFORMATIQUE

(43) Veröffentlichungstag der Anmeldung: 15.12.2021
(73) Patentinhaber: Siemens Aktiengesellschaft, 80333 München (DE)
(72) Erfinder: Adam, Alexander, 92637 Weiden (DE); Rother, Klaus, 91244 Reichenschwand (DE); Schott, Markus, 36166 Haunetal-Stärklos (DE)
(74) Vertreter: Siemens Patent Attorneys

(56) Entgegenhaltungen:
- US-A1- 2014 137 257
- US-A1- 2018 146 004
- "IEC 62443-3-2 ED1: Security for industrial automation and control systems - Part 3-2: Security risk assessment for system design", 3 April 2020 (2020-04-03), pages 1 - 31, XP082020455, Retrieved from the Internet <URL:https://www.iec.ch/cgi-bin/restricted/getfile.pl/65_799e_FDIS.pdf?dir=65&format=pdf&type=_FDIS&file=799e.pdf> [retrieved on 20200403]
- ANONYMOUS: "STRIDE (security) - Wikipedia", 8 June 2020 (2020-06-08), XP055746747, Retrieved from the Internet <URL:https://en.wikipedia.org/w/index.php?title=STRIDE_(security)&oldid=961498093> [retrieved on 20201104]

## Beschreibung

Der Begriff Sicherheit ist im Deutschen nicht eindeutig besetzt, im technischen Umfeld unterscheidet man dabei zwischen zwei Aspekten, welche im Englischen als "Safety" und "Security" differenziert werden.

Der Begriff "Security" hat in Deutschland eine sehr weitreichende Bedeutung, insbesondere technische Sicherungsmaßnahmen (Sicherungstechnik). In den Normen, Richtlinien und Regelwerken wird, wenn "Security" gemeint ist, in der Regel der Begriff Sicherungstechnik verwandt, wenn es um die die Angriffssicherheit geht, wie z. B. bei der Sicherheit bzw. Vertraulichkeit von Daten (Verschlüsselungstechnologien, Authentifizierungsmechanismen). Bei der Sicherungstechnik handelt es sich grundsätzlich um die Erkennung, Begrenzung und Abwehr von Bedrohungen gegen materielle bzw. virtuelle Einrichtungen, Gegenstände bzw. Sachen. Wenn im Folgenden über Sicherheit gesprochen wird, dann ist damit dieser oben beschriebene "Security" Aspekt gemeint.

Darüber hinaus gibt es die Bedeutung im Sinne von "Safety", bei dem grundsätzlich die Betriebssicherheit gemeint ist. Es steht das Verhindern von Einwirkungen auf Individuen (z. B. Schutz von Menschen) im Vordergrund. Hierbei handelt es sich um vorbeugende Maßnahmen gegen den Eintritt von Ereignissen (Vorfällen, Unfällen und anderen unerwünschten Zuständen), die ihren Ursprung in nichtbeabsichtigten menschlichen und/oder technischen Unzulänglichkeiten haben, sowie mit der Begrenzung oder Beherrschung solcher Vorfälle, und mit allgemeinen Problemen der Arbeitssicherheit.

Eine Definition und Differenzierung findet sich beispielsweise auf https://de.wikipedia.org/wiki/Sicherheit.

Im Automatisierungsbereich gibt es Geräte, die in einer Anlage sicherheitskritisch sind. Für viele der Geräte sind individuelle Sicherheitseinstellungen vorzunehmen. Darüber hinaus ist für den Betrieb der Anlage ein komplexes Regelwerk einzuhalten z. B. IEC 62443, "Defense in Depth", "Operational Guidelines".

Mit zunehmendem Einzug der Digitalisierung in der Industrie nehmen die Sicherheitsanforderungen an die Automatisierung noch weiter zu, da die Komplexität in den Anlagen steigt, durch immer mehr vernetzte, automatisierte und kommunizierende Komponenten. Auch nimmt das Risiko von unerwünschten Einbruchsversuchen von außen zu.

Anhand von festgelegten Kriterien können Softwareschwachstellen beurteilt, deren Ausnutzung minimiert, bekannte Schadsoftware bekämpft und Sicherheitsmechanismen überprüft werden.

Ganz allgemein versteht man unter einer potentiellen Gefahr, die durch eine Schwachstelle ausgelöst wird, ein Ereignis, das Schaden verursacht, um einen Angriff auf ein System, eine Übertragungstrecke oder auf den Informationsinhalt einer Nachricht, um Spionage oder Sabotage oder auch Gefahren, die unbeabsichtigt oder durch natürliche Ereignisse wie Stromausfall, oder vorsätzlich von Mitarbeitern ausgehen.

Eine automatische Unterstützung des Anwenders oder Kunden zur Ermittlung der erforderlichen Maßnahmen, beispielsweise die Ermittlung eines Security Levels gemäß IEC 62443 für seine Anlage sowie die entsprechende Unterteilung in Sicherheitszonen fehlt jedoch derzeit.

Ebenso fehlt eine automatisch erstellte Übersicht der sicherheitsrelevanten Einstellungen, Konfigurationen oder eine anlagenübergreifende Auflistung der bekannten, notwendigen Security Updates und Randbedingungen.

Wünschenswert wäre außerdem eine automatisch erstellte Übersicht über die erforderlichen Maßnahmen, um mit bestehenden Regelwerken konform zu sein, beispielsweise um einen IEC 62443 konformen Security Level zu erreichen.

Eine automatisierte Unterstützung beim Sammeln, Analysieren und Bewerten der Angriffsvektoren könnte helfen, daraus Schutzmaßnahmen abzuleiten.

Eine Analyse der Auswirkungen von Änderungen, auch FMEA Methode (Fehlermöglichkeits- und -einflussanalyse) genannt, wäre ebenfalls hilfreich.

Derzeit gibt es keine automatisierten Hilfsmittel für die Sicherheitsbewertung, Maßnahmendefinition und Nachverfolgung nach festgelegten Regelwerken und Normen im Industrieumfeld. Manuelles und automatisches Sammeln der Informationen zu den einzelnen Assets ist nur partiell vorhanden.

Aktuell wird die Analyse nur zu bestimmten Zeitpunkten und manuell durchgeführt. Diese Analyse muss zyklisch über den Lebenszyklus der Anlage hinweg wiederholt werden.

Das manuelle Sammeln der Informationen enthält Potential für Fehleranfälligkeit, fehlendes Knowhow, Unvollständigkeit und auch schwierige Reproduzierbarkeit der Bewertungskriterien wegen individueller menschlicher Ausführung.

US2014/137257A1 offenbart eine halb-automatisierte Schwachstellen-Analyse in einem Steuersystem für eine kritische Infrastruktur.

Es ist Aufgabe der Erfindung, ein Verfahren und eine Vorrichtung anzugeben, welche eine automatisierte Sicherheitsbewertung einer Anlage durchführt und dabei die oben genannten Nachteile überwindet.

Diese Aufgabe wird gelöst durch ein Verfahren mit den Merkmalen gemäß Patentanspruch 1, ein Computerprogrammprodukt gemäß den Merkmalen des Patentanspruchs 8 sowie einer Vorrichtung gemäß den Merkmalen des Patentanspruch 9. Weitere vorteilhafte Ausführungsformen der Erfindung sind in den Unteransprüchen angegeben.

Das Analyse-Regelwerk ist eine Meta-Daten-Basis, die die Sicherheitsbedrohungen verschiedener Asset-Typen betreffend die Entities, also Benutzer/Gruppen/Rollen, Geräte, Dienste, Applikationen auf den Geräten, usw. abhängig von deren Konfiguration beschreibt.

Die hier folgende Beschreibung ist hinreichend, aber nicht abschließend, zur Durchführung des Verfahrens, es können in allen Kategorien weitere Informationen erhoben und verwendet werden.

Zu diesem Zweck werden für das erfindungsgemäße Verfahren folgende Klassen eingeführt:

### TrustZone:

| Attribute | Beschreibung | Art der Daten |
|---|---|---|
| ZoneID* | Eindeutiger Identifier | Instanz |
| Name | Name | Instanz |
| SecurityLevel | Numerischer Wert für das benötigte Security Level einer Zone | Instanz |

### Entities:

### (Benutzer/Gruppen/Rollen, Geräte, Dienste, Applikationen, ...):

| Attribute | Beschreibung | Art der Daten |
|---|---|---|
| EntityID* | Eindeutiger Identifier | Instanz |
| EntityTypeID* | Identifier des Typs (MetaID) | Typ |
| SecurityCriteria | Aus der automatisiert geführten Klassifikation, siehe unten | Typ |
| ZoneID | TrustZone in der sich das Asset befindet | Instanz |
| Name | Name | Instanz |
| Attributes <Key, Value> | Liste der Attribute | Typ / Instanz |

### Communications / Relations

| Attribute | Beschreibung | Art der Daten |
|---|---|---|
| RelationID* | Eindeutiger Identifier | Instanz |
| RelationTypeID* | Identifier des Typs (MetaID) | Typ |
| SecurityCriteria | Aus der automatisiert geführten Klassifikation, siehe unten | Typ |
| SourceEntityID | Ausgangspunkt der Kommunikation / Relation | Instanz |
| DestinationEntityID | Endpunkt der Kommunikation / Relation | Instanz |
| Name | Name | Instanz |
| Attributes <Key, Value> | Liste der Attribute | Typ / Instanz |

### Bedrohungstyp (Threat):

| Attribute | Beschreibung | Art der Daten |
|---|---|---|
| ThreatTypeID* | Identifier des Bedrohungstyps (MetaID) | Type |
| SecurityCriteria | Aus der automatisiert geführten Klassifikation, siehe unten | Type |
| FilterExpression | | Type |
| Title | Bezeichnung | Type |
| AttackType | S, T, R, I, D, E | Type |
| Impact | Mögliche Auswirkungen | Type |

| Description | Beschreibung des Bedrohungstyps | Type |
|---|---|---|
| PossibleMitigation | Beschreibung einer möglichen Eindämmungsstrategie | Type |

| | | |
|---|---|---|
| (* = Identifikator / Primary Key) | | |

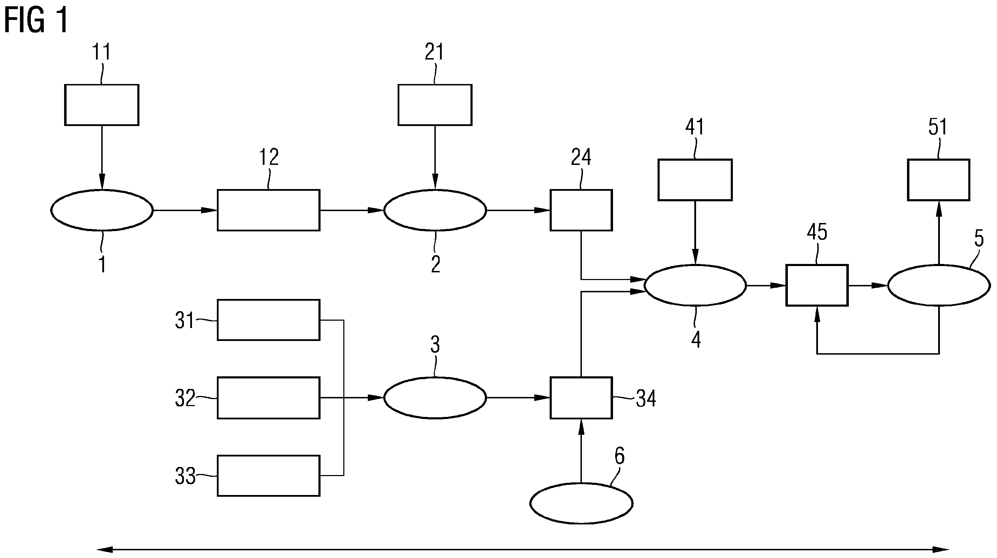

Die untenstehende Beschreibung bezieht sich auf das Ablaufdiagramm, welches in der Figur 1 dargestellt ist.

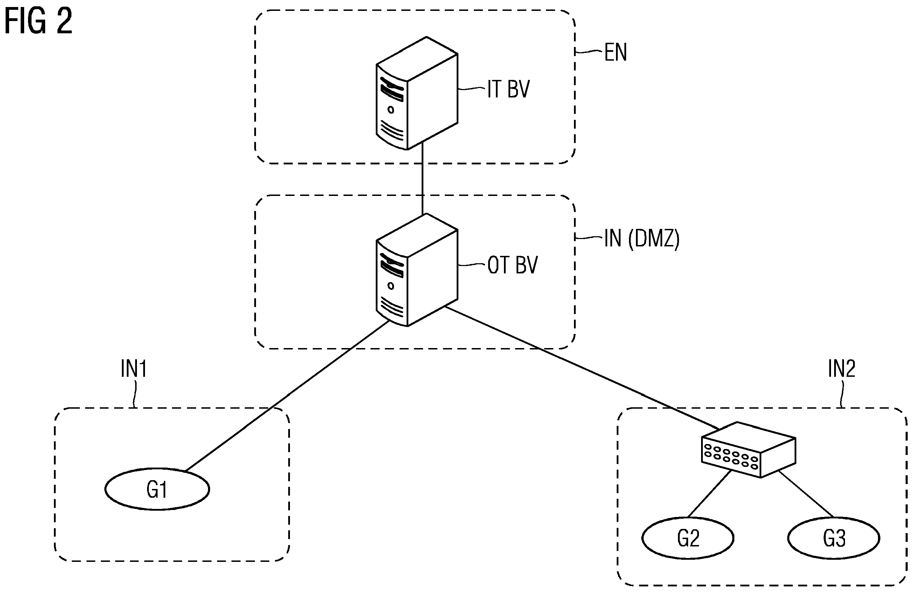

Eine sehr vereinfachte schematische Darstellung einer betroffenen Anlage findet sich in Figur 2.

Geräte G1, G2, G3 befinden sich organisatorisch und hierarchisch gegliedert in verschiedenen Sicherheits-Zonen extern EN, und intern IN(DMZ), IN1, IN2, mit gegebenenfalls verschiedenen Sicherheitsanforderungen. Informationen zum Asset Inventory beziehen sich auf eine solche beispielhaft dargestellte Struktur.

Im Folgenden wird nun das gewünschte Vorgehen anhand vom Ablaufdiagram Figur 1, basierend auf einer Anlagenarchitektur, wie in Figur 2 schematisch dargestellt, in 5 Schritten dargestellt:
Schritt 1 - Automatisiert geführte Sicherheits-Klassifikation und Ermittlung des Sicherheits-Bedarfs:
Sofern noch keine Datenbasis zur weiteren Auswertung vorhanden ist, kann diese vorab ermittelt werden, beispielsweise über einen Fragenkatalog 11 zum Sicherheits- und Schutzbedarf und möglicher Anforderungen zur Einhaltung bekannter Security Standards (z. B. IEC 62443), wobei diese beispielsweise von einem Benutzer zur Eingabe abgefragt werden können.

Die so ermittelten Daten und Informationen werden als Datenobjekte gesammelt und benannt. Danach wird der Schutzbedarf dieser Daten und Informationen ermittelt, d. h. die Auswirkungen eines Verlustes oder Angriffs werden bewertet, **1.**

### Eingabe / Input:

Ein Fragenkatalog zur Ermittlung des benötigten Schutzes basierend auf verschiedenen (bekannten, teilweise oben aufgeführten) Standards oder vom Anwender vorgegebene Richtlinien, 11.

### Ausgabe / Output:

Eine Liste von anwenderspezifischen Sicherheits-Kriterien zur Filterung der benötigten Regeln aus der Gesamtheit des Analyseregelwerks, 12, (z. B. die Anforderungen für Security Level 2 von IEC 62443) und den sich daraus ergebenden Schutzanforderungen für die einzelnen Assets (z. B. der Bedarf für eine verschlüsselte Kommunikation).

Die Sicherheits-Kriterien sind im "Gesamt-Analyse-Regelwerk" den Bedrohungstypen / Threats zugeordnet.

Es kann auch ein maximaler Schutzlevel der betrachteten Anlage ermittelt werden.

### Schritt 2 - Regel-Generator:

Der Regel-Generator 2 filtert die benötigen Regeln aus dem Gesamtregelwerk, 21. Optional können die so generierten Regeln durch den Benutzer auch nach Bedarf angepasst werden.

### Eingabe / Input:

- Bedarf an Sicherheits-Kriterien, 12
- Gesamtes Regelwerk (z. B. IEC 62443, IEC 27001, interne Policies, beschrieben durch Metawissen, ...) 21,
- Input aus verschieden Quellen z. B. FW (Firmware) Version Requirements, Security Vulnerability Information SVI, Patch Level der verwendeten Assets, CVSS (Common Vulnerability Scoring System, Allgemeines Verwundbarkeitsbewertungssystem, ein

Industriestandard zur Bewertung des Schweregrades von möglichen oder tatsächlichen Sicherheitslücken in Computer-Systemen)
- Analyse und Identifikation der Bedrohungen,
- Erstellung eines Bedrohungskatalogs und entsprechenden Regeln,
- Bedrohungsanalyse nach dem "STRIDE" Modell. Hierbei handelt es sich um ein Modell, das entwickelt wurde, um Bedrohungen für die Computersicherheit zu identifizieren. Es bietet eine Kurzbezeichnung für Sicherheitsbedrohungen in sechs Kategorien. Die Buchstaben stehen dabei für:
   Spoofing (Täuschungsmethoden in Computernetzwerken zur Verschleierung der eigenen Identität)
   Tampering (Sabotage durch Einbringung eines manipulierten Produkts)
   Repudiation (Änderung der Autorenschaft für durch einen böswilligen Nutzer ausgeführte Aktionen, um Log-Files zu manipulieren und Handlungen zu verschleiern. Siehe auch Spoofing.) Information disclosure (Datenschutz / privacy breach or data leak)
   Denial of service ("Verweigerung des Dienstes", bezeichnet die Nichtverfügbarkeit eines Dienstes beispielsweise durch die gezielte Herbeiführung einer Überlastung.)
   Elevation of privilege (Privilegien-Eskalation, bezeichnet die Ausnutzung eines Konstruktions- oder Konfigurationsfehlers einer Software mit dem Ziel, einem Benutzer oder einer Anwendung Zugang zu Ressourcen zu verschaffen, deren Nutzung mit eingeschränkten Rechten nicht möglich ist.)

### Ausgabe / Output:

Erzeugt wird ein angepasstes Regelwerk für die automatisierte Analyse der Anlage, 24.

Im Schritt 2 werden die relevanten Bedrohungsszenarien und Assets anhand der Sicherheits-Kriterien aus dem "Gesamt-Analyse-Regelwerk" herausgefiltert.

### Schritt 3 - Automatisierte Sammlung/Aggregation der Anlageninformationen:

Das Sammeln der Informationen zu den einzelnen Assets wird automatisiert durchgeführt, es kann bei Bedarf durch manuelles Sammeln ergänzt und eingegeben werden. Die Information, in welcher Zone/Bereich das Gerät aktuell verbaut oder gelagert wird, muss beispielsweise ggf. manuell zugeordnet oder ergänzt werden. Es wird auf diese Weise, basierend auf diesen Informationen ein digitaler Zwilling angelegt, welcher mit Informationen zur Sicherheit der Anlage angereichert ist.

### Eingabe / Input:

Anlageninformationen, welche zur Verfügung stehen, wobei in der Figur keine vollständige Aufzählung dargestellt ist. Weitere Informationsgruppen, die ebenfalls herangezogen werden können, sind unten aufgeführt:
- Engineering-Daten; **z. B.** aus dem TIA Konfiguration System von Siemens oder vergleichbaren Anwendungen,
- SIEM (Security Information and Event Management)
- Logging, Monitoring, Diagnose und Audit Daten Netzwerk Analyse
- Anlagenstruktur (z. B. Anlagen-Topologie scan, Geräte / Komponenten discovery, 33
- Konfiguration, 31
- mögliche Interaktionen z. B. mittels Kommunikation
- Identity und Access Management (IAM)
- Integritätsüberwachung
- Software, Firmware und Patch Level Management
- Anomalieerkennung (auch mittels Intrusion Detection Systemen, IDS, genannt)
- Anlagen-Geografie, 32, die beschreibt, in welcher Security Zone das Gerät liegt und welche Netzwerke zur Kommunikation verwendet werden.

### Ausgabe / Output:

Ein Asset-Inventory 34, also ein Verzeichnis von allen bekannten Anlageinformationen der Entities und deren Beziehungen und Eigenschaften untereinander.

### Schritt 4 - Security-Auditor (Automatisierte Analyse):

Die generierten Analyseregeln werden auf die gesammelten Anlageninformationen (Asset-Inventory, 34) angewendet und in Form einer Liste, eines sog. Audit-Trail dem Benutzer zu Verfügung gestellt. Der Geltungsbereich (Ort, Anlagenteil, Sicherheitszone), Geräte- oder Komponententyp (z. B. PLC, Switch), Funktionsumfang /-bereich (z. B. Benutzer-Authentisierung, Autorisierung, Zertifikatmanagement, OPC-UA, Logging) kann durch den Benutzer eingestellt werden.

### Eingabe / Input:

- Anlageninformationen (Asset-Inventory, 34) aus Schritt 3.
- Generierte Analyseregeln 24 aus Schritt 2.
- Geltungsbereich der Analyse 41

### Ausgabe / Output:

Ein sogenannter Audit Trail wird erzeugt, also eine Liste von Ereignisdatensätzen (Findings oder Abweichungen) die im Folgenden bewertet und für die die entsprechenden Maßnahmen definiert werden.

Unter einem Audit Trail versteht man im Allgemeinen ein Werkzeug der Qualitätssicherung. Er dient der Kontrolle und Aufzeichnung von Änderungen, die in Prozessen vorgenommen werden. Im Vergleich zu anderen Monitoring-Systemen, die bestimmte Prozesse durchgehend überwachen, liegt bei Audit-Trails der Fokus auf Überwachung von Änderungs- und Löschungshandlungen der Benutzer. Somit sind Eingriffe in Prozesse für nachgelagerte Ebenen in Liefer- und Wertschöpfungsketten verständlich, kontrollierbar und lückenlos einsehbar.

In Schritt 4 wendet der Security Auditor das in Schritt 2 entstandene Regelwerk 24 auf die gesammelten Anlageninformationen (das Asset Inventory 34) unter Berücksichtigung von Geltungsbereich 41 an.

Es wird dann aus dem Asset Inventory ein Objektmodell aufgebaut, mit den Eigenschaften, die im Schritt 2 aus dem Regel-Generator gefilterten Metamodell beschrieben sind.

Für jedes gefundene Asset (Entities und Relations, Geräte und Beziehungen) wird jede Bedrohung (Threat) in der Liste aus Schritt 2 anhand eines Filterbegriffs (FilterExpression) überprüft. Wenn diese Bedrohung das gefundene Asset betrifft, dann wird das als Ergebnis (Treffer / Finding/ Abweichung) in der Liste (Audit Trail) eingetragen.

### Schritt 5 - Bewertung, Maßnahmendefinition, Nachverfolgung / Tracking:

Eine Bewertung des erzeugten Audit Trails erfolgt anhand einer bereitgestellten Checkliste.

Weitere Maßnahmen 51 werden, basierend auf der Bewertung der Audit Trails definiert, beispielsweise anhand eines Katalogs mit möglichen Maßnahmen-Vorschlägen.

Tracking - Die Audit Trails dienen auch zur späteren Nachverfolgung der Umsetzung und Wirksamkeit der gefundenen Maßnahmen.

### Eingabe / Input:

### Audit Trail 45

### Ausgabe / Output:

Ein modifizierter Audit-Trail 45 und definierte Maßnahmen 51 (mit optionaler Anbindung an ein bestehendes Defect-Management-Tool, um eine Umsetzung der Maßnahmen verfolgen zu können).

Figur 1 zeigt den Prozessablauf zur Führung des Anwenders durch automatisierte Unterstützung bei der Klassifikation, Erfassung der Assets, Analyse, Bewertung, Maßnahmendefinition und Nachverfolgung.

### Aus dem beschriebenen Verfahren ergeben sich folgende Vorteile:

Die Anlagenbewertung wird nach definierten Regelwerken (wie dem bereits in der Einleitung zitierten IEC 62443) vereinfacht.

Der definierte Ablauf kann über den kompletten Anlagen-/ Produkt - Lebenszyklus in Echtzeit und auf aktuellen Daten basierend angewendet werden.

Ein weiterer Vorteil des beschriebenen Gegenstands sind die Reduzierung der Betriebsausgaben (OPEX Kosten, operational expenditure) über die gesamte Lebenszeit einer Anlage, die durch erforderliche, wiederkehrende Sicherheits-Audits (z. B. bei kritischen Infrastrukturen) entstehen. Hierunter fällt auch die automatisierte Erfassung sicherheits-relevanter Assets.

Es kann durch eine Anwenderführung über einen Fragenkatalog eine Fokussierung der Audits beispielsweise auf bestimmte Themen oder Bereiche geschehen. Der Benutzer wird durch die Klassifizierung seiner Anlage geführt und muss nicht, wie bisher, alle relevanten Normen lesen, bewerten und für seinen konkreten Anwendungsfall anpassen.

Ein weiterer Vorteil des vorgeschlagenen Vorgehens ist es, dass eine anlagenweite Sicherheits-Betrachtung durchgeführt werden kann, die nicht nur auf Automatisierungskomponenten eines einzelnen Herstellers begrenzt ist, sondern hersteller-übergreifend funktioniert.

Durch eine geeignete Benutzerführung und automatisierte Unterstützung bei der prozesskonformen Durchführung von Assessments, Incident-Handling und Definition von Security-Maßnahmen sowie deren Nachverfolgung weist das Verfahren ebenfalls einen hohen Grad an Nutzerfreundlichkeit auf.

Die vorgeschlagene Analyse kann durch die Automatisierung über den Lebenszyklus hinweg angestoßen werden z. B. ereignis- oder zeitgesteuerte, externe oder interne Anfragen, Incident-/Patch-Management, etc.

Ein Anwender kann ein System, welches nach dem vorgeschlagenen Verfahren arbeitet, einfach bedienen, er wird durch einen für ihn verständlichen Fragenkatalog (zum Beispiel unter Verwendung von Fachbegriffen, abhängig von vorhandenen Security Knowhow des Anwenders) geführt. Die gesuchten Security Kriterien werden aus den Antworten und durch Kombination mit dem Metawissen ermittelt. Zusammengefasst läuft das Verfahren wie folgt ab:
Der Regel-Generator verwendet die Security Kriterien, um aus einem komplexen Regelwerk mit vielen Eingangsgrößen anwenderspezifische Analyse-Regeln herauszuarbeiten.

Alle anlagenrelevanten Daten (z. B. welche Geräte mit welchem Firmware-/Software Stand und welchen Sicherheitseinstellungen) werden, soweit möglich automatisiert, in einem Inventar zusammengetragen.

Der maschinelle Security-Auditor wendet das anwenderspezifische Regelwerk auf die gesammelten Anlagendaten aus dem Asset-Inventory an und erstellt daraus die Audit-Trails.

Die Ergebnisse dieser Audits werden automatisch mit möglichen Maßnahmen hinterlegt und müssen so nicht selbstständig vom Anwender erarbeitet oder in Erfahrung gebracht werden, sie können jedoch vom Anwender spezifisch angepasst werden. Außerdem hilft diese maschinengestützte Anwendungskette die Maßnahmen für die gefundenen Lücken automatisiert nachzuverfolgen.

Die automatisierte Sammlung und Analyse können als Dienst bereitgestellt werden, um somit auch Änderungen an der Anlage nachverfolgen zu können.

## Patentansprüche

1. Verfahren zum Erstellen einer automatisierten Sicherheits-Analyse einer Anlage, wobei
Anlageninformationen (34) und deren Beziehungen und Eigenschaften untereinander gesammelt werden (3), und Analyseregeln (24) aus einer Gesamtheit eines AnalyseRegelwerks (21) gefiltert werden, und diese Analyseregeln (24) auf die Anlageninformationen (34) angewendet werden (4), wobei
ein Geltungsbereich (41) der Anwendung festgelegt wird und ein Ergebnis in Form eines Audit-Trails (45) als Liste von Ereignisdatensätzen ausgegeben wird, **dadurch gekennzeichnet, dass** eine Bewertung des Audit-Trails anhand einer bereitgestellten Checkliste erfolgt und Maßnahmen (51) von Handlungsempfehlungen definiert werden, basierend auf der Bewertung des Audit Trails, anhand eines Katalogs mit möglichen Maßnahmen-Vorschlägen.

2. Verfahren gemäß Patentanspruch 1,
**dadurch gekennzeichnet, dass** in einem weiteren Schritt eine Durchführung der Maßnahmen für Handlungsempfehlungen automatisiert nachverfolgt werden und abhängig von den Nachverfolgungsergebnis neue Handlungsempfehlungen erzeugt werden.

3. Verfahren gemäß einem der vorherigen Patentansprüche,
**dadurch gekennzeichnet, dass** die Analyseregeln (24) aus einer Gesamtheit eines Analyseregelwerks (21) gefiltert werden anhand von anwenderspezifischen Sicherheits-Kriterien (12) und sich daraus ergebenden Schutzanforderungen.

4. Verfahren gemäß einem der vorherigen Patentansprüche,
**dadurch gekennzeichnet, dass** zur Generierung der Anlageninformationen (24) Daten und Informationen zu der Anlage als Datenobjekte gesammelt werden und ein Schutzbedarf dieser Daten und Informationen ermittelt wird, der eine Aussage enthält über die Auswirkungen einer Sicherheitsbedrohung durch Daten-Verlust oder Angriff.

5. Verfahren gemäß einem der vorherigen Patentansprüche,
**dadurch gekennzeichnet, dass** die Anlageninformationen (34) zumindest eine der folgenden Informationen umfassen:
- Engineering-Daten,
- Konfigurationsdaten (31)
- Daten zu Kommunikation innerhalb der Anlage
- Sicherheitsdaten, insbesondere Identity und Access Management Daten
- Integritätsdaten,
- Versions-Daten der unterliegenden Software,
- Anomalieerkennungsdaten,
- Topologiedaten
- Geografiedaten, (32)
- Daten zur Anlagenstruktur (33),
- Daten zu Sicherheitszonen (EN, IN).

6. Verfahren gemäß einem der vorherigen Patentansprüche,
**dadurch gekennzeichnet, dass** ein Objektmodell aufgebaut wird, mit den Eigenschaften, die aus, aus einem vom Regel-Generator gefilterten Metamodell beschrieben sind, und
für jedes gefundene Asset (34) jede Sicherheitsbedrohung in der Liste anhand eines Filterbegriffs überprüft wird und wenn diese Sicherheitsbedrohung das gefundene Asset betrifft, dann wird das als Ergebnis in der Liste oder den Audit Trail eingetragen.

7. Verfahren gemäß einem der vorherigen Patentansprüche,
**dadurch gekennzeichnet, dass** anwenderspezifischen Sicherheits-Kriterien (12) ermittelt werden anhand folgender Schritte:
- Analyse und Identifikation der Bedrohung,
- Erstellung eines Bedrohungskatalogs und entsprechenden Regeln,
- Bedrohungsanalyse nach dem "STRIDE" Modell.

8. Computerprogrammprodukt ausgebildet und geeignet zur Durchführung der Schritte eines der Verfahren gemäß einem der Patentansprüche 1 bis 7.

9. Vorrichtung ausgebildet zur Durchführung des Verfahrens gemäß eines der Patentansprüche 1 bis 7,
mit einer Sammeleinheit zum Sammeln von Anlageninformationen (34), und
mit einer Erzeugeeinheit zum Filtern von Analyseregeln (24) aus einer Gesamtheit eines Analyse-Regelwerk, und
mit einer Analyseeinheit zum Anwenden dieser Analyseregeln (24) auf die Anlageninformationen (34), unter Berücksichtigung eines Geltungsbereichs (41) der Anwendung und
einer Ausgabeeinheit, die ein Ergebnis der Anwendung der Analyseregeln auf die Anlageninformationen in Form eines Audit-Trails (45) als Liste von Ereignisdatensätzen ausgibt, wobei eine Bewertung des Audit-Trails anhand einer bereitgestellten Checkliste erfolgt.

## Claims

1. Method for preparing an automated security analysis for an installation, wherein
installation information (34) and the relationships and properties among said information are collected (3), and
analysis rules (24) are filtered out of the totality of an analysis rulebook (21), and
these analysis rules (24) are applied (4) to the installation information (34), wherein
a scope of validity (41) of the application is specified and
a result is output in the form of an audit trail (45) as a list of event datasets, **characterized in that** the audit trail is evaluated on the basis of a supplied checklist, and measures (51) for recommended actions are defined, on the basis of the evaluation of the audit trail, on the basis of a catalogue containing possible measures/proposals.

2. Method according to Patent Claim 1,
**characterized in that** in a further step the execution of the measures for recommended actions is tracked by automated means, and new recommended actions are generated depending on the result of the tracking.

3. Method according to either of the preceding patent claims,
**characterized in that** the analysis rules (24) are filtered out of the totality of an analysis rulebook (21) on the basis of user-specific security criteria (12) and resultant protection requirements.

4. Method according to one of the preceding patent claims,
**characterized in that**, in order to generate the installation information (24), data and information relating to the installation are collected as data objects, and a protection requirement for these data and this information is ascertained that contains a statement about the effects of a security threat arising from data loss or attack.

5. Method according to one of the preceding patent claims,
**characterized in that** the installation information (34) comprises at least one of the following pieces of information:
- engineering data,
- configuration data (31),
- data relating to communication within the installation,
- security data, in particular identity and access management data,
- integrity data,
- version data for the underlying software,
- anomaly detection data,
- topology Data,
- geography data, (32)
- data relating to the installation structure (33),
- data relating to security zones (EN, IN).

6. Method according to one of the preceding patent claims,
**characterized in that** an object model is constructed that has the properties described by a metamodel filtered by the rule generator, and
for each asset (34) found, each security threat in the list is checked on the basis of a filter term, and if this security threat affects the asset found, then this is entered as the result in the list or the audit trail.

7. Method according to one of the preceding patent claims, **characterized in that** user-specific security criteria (12) are ascertained on the basis of the following steps:
- analysis and identification of the threat,
- preparation of a threat catalogue and corresponding rules,
- threat analysis according to the "STRIDE" model.

8. Computer program product designed and suitable for carrying out the steps of one of the methods according to one of Patent Claims 1 to 7.

9. Apparatus designed for carrying out the method according to one of Patent Claims 1 to 7,
having a collecting unit for collecting installation information (34), and
having a generating unit for filtering analysis rules (24) out of the totality of an analysis rulebook, and
having an analysis unit for applying these analysis rules (24) to the installation information (34), taking into account a scope of validity (41) of the application, and
an output unit that outputs a result of the application of the analysis rules to the installation information in the form of an audit trail (45) as a list of event datasets, the audit trail being evaluated on the basis of a supplied checklist.

## Revendications

1. Procédé de génération d'une analyse de sécurité automatisée d'une installation, dans lequel
des informations relatives à l'installation (34) et leurs relations et propriétés entre elles sont collectées (3), et
des règles d'analyse (24) sont filtrées à partir d'un ensemble de règles d'analyse (21), et ces règles d'analyse (24) sont appliquées (4) aux informations relatives à l'installation (34), dans lequel
un domaine d'application (41) est défini et un résultat sous forme d'une trace d'audit (45) est édité sous forme d'une liste de jeux de données d'événements, **caractérisé en ce qu'**une évaluation de la trace d'audit est effectuée à l'aide d'une liste de contrôle fournie, et des mesures (51) sont définies à partir des recommandations d'action, sur la base de l'évaluation de la trace d'audit, à l'aide d'un catalogue contenant des recommandations de mesures possibles.

2. Procédé selon la revendication 1,
**caractérisé en ce que**, dans une étape suivante, la mise en œuvre des mesures recommandées peut être suivie automatiquement et, en fonction des résultats de suivi, de nouvelles recommandations sont générées.

3. Procédé selon l'une des revendications précédentes,
**caractérisé en ce que** les règles d'analyse (24) sont filtrées à partir d'un ensemble de règles d'analyse (21) à l'aide de critères de sécurité spécifiques à l'utilisateur (12) et des exigences de protection qui en découlent.

4. Procédé selon l'une des revendications précédentes,
**caractérisé en ce que**, pour la génération des informations relatives à l'installation (24), les données et informations relatives à l'installation sont recueillies sous forme d'objets de données et le besoin de protection de ces données et informations est déterminé, ce qui permet de déterminer les conséquences d'une menace pour la sécurité à la suite d'une perte de données ou d'une attaque.

5. Procédé selon l'une des revendications précédentes,
**caractérisé en ce que** les informations relatives à l'installation (34) comprennent au moins l'une des informations suivantes :
- données d'ingénierie,
- données de configuration (31),
- données relatives à la communication au sein de l'installation,
- données de sécurité, en particulier données de gestion des identités et des accès,
- données d'intégrité,
- données de version du logiciel sous-jacent,
- données de détection des anomalies,
- données topologiques,
- données géographiques (32),
- données relatives à la structure de l'installation (33),
- données relatives aux zones de sécurité (EN, IN).

6. Procédé selon l'une des revendications précédentes,
**caractérisé en ce qu'**un modèle d'objet est créé avec les propriétés décrites à partir d'un métamodèle filtré par le générateur de règles, et
pour chaque ressource trouvée (34), chaque menace pour la sécurité figurant dans la liste est vérifiée à l'aide d'un critère de filtrage et, si cette menace concerne la ressource trouvée, elle est alors saisie comme résultat dans la liste ou dans la trace d'audit.

7. Procédé selon l'une des revendications précédentes,
**caractérisé en ce que** les critères de sécurité spécifiques à l'utilisateur (12) sont déterminés à l'aide des étapes suivantes :
- analyse et identification de la menace,
- création d'un catalogue de menaces et de règles correspondantes,
- analyse des menaces selon le modèle « STRIDE ».

8. Produit de programme informatique conçu et adapté pour l'exécution des étapes de l'un des procédés selon l'une des revendications 1 à 7.

9. Dispositif conçu pour l'exécution du procédé selon l'une des revendications 1 à 7,
avec une unité de collecte pour recueillir des informations relatives à l'installation (34), et
avec une unité de génération pour filtrer les règles d'analyse (24) à partir d'un ensemble de règles d'analyse, et
avec une unité d'analyse pour appliquer ces règles d'analyse (24) aux informations relatives à l'installation (34), en tenant compte d'un domaine d'application (41), et
une unité de sortie qui émet un résultat des règles d'analyse appliquées aux informations relatives à l'installation sous la forme d'une trace d'audit (45) en tant que liste de jeux de données d'événements, dans lequel une évaluation de la trace d'audit est réalisée à l'aide d'une liste de contrôle mise à disposition.
